# EUROPEAN PATENT SPECIFICATION

(11) **EP 2 191 445 B1**
(45) Date of publication and mention of the grant of the patent: **31.05.2017**
(21) Application number: 08799185.7
(22) Date of filing: 04.09.2008
(51) Int. Cl.: G06T 17/00, G06T 7/20, G06F 3/01, G06F 3/03

(54) **INTEGRATED MOTION CAPTURE**
INTEGRIERTE BEWEGUNGSERFASSUNG
CAPTURE DE MOUVEMENTS INTÉGRÉE

(30) Priority: 04.09.2007 US 969908 P
(43) Date of publication of application: 02.06.2010
(73) Proprietor: Sony Corporation, Tokyo 108-0075 (JP); Sony Pictures Entertainment Inc., Culver City, CA 90232 (US)
(72) Inventor: GORDON, Demian, San Diego, CA 92127-1898 (US); HAVALDAR, Parag, San Diego, CA 92127-1898 (US)
(74) Representative: D Young & Co LLP
(86) International application number: PCT/US2008/075284
(87) International publication number: WO 2009/032944

(56) References cited:
- WO-A2-02/31772
- WO-A2-2008/057957
- DE-A1- 10 335 595
- US-A1- 2007 047 768
- US-A1- 2007 058 839
- US-B2- 6 801 637
- US-B2- 7 218 320
- US-B2- 7 239 718
- GREGOR A. KALBERER ET AL: "Realistic face animation for speech", THE JOURNAL OF VISUALIZATION AND COMPUTER ANIMATION, vol. 13, 1 January 2002 (2002-01-01), pages 97-106, XP55010027, DOI: 10.1002/vis.283)

## Description

### BACKGROUND

The present invention relates generally to motion capture, and more particularly to integrated motion capture where body motion capture and facial motion capture are performed and the results are integrated into a single motion capture output.

Existing methods and systems for motion capture ("MOCAP") utilize certain specialized techniques for facial and body motion capture. The techniques share certain common elements, such as acquiring a motion with a plurality of MOCAP cameras, reconstructing a three-dimensional ("3-D") virtual space modeling of the physical space in which the motion was captured, and tracking and labeling images of markers coupled at various places on the actor's body through a temporal sequence of volumetric frames comprising the virtual space. Each type of motion capture, however, has unique inherent difficulties that can be overcome in different ways.

US 2007/0058839A describes a prior art device that performs motion capture. Similarly WO 2008/057957 describes a prior art device according to Article 54(3) EPC. A further prior art device is described in US2007/0047768.

Certain implementations as disclosed herein provide for integrated motion capture.

In one aspect, an integrated motion capture method according to Claim 1 is disclosed.

In another aspect, an integrated motion capture system according to Claim 12 is disclosed.

Other features and advantages of the present invention will become more readily apparent to those of ordinary skill in the art after reviewing the following detailed description and accompanying drawings.

### BRIEF DESCRIPTION OF THE DRAWINGS

The details of the present invention, both as to its structure and operation, may be gleaned in part by study of the accompanying drawings, in which:
Figure 1 shows a sample collection of specialized "known pattern" markers used for body motion capture according to an implementation of the present invention;
Figure 2 shows a two-dimensional ("2-D") "unwrapped" scan of a person's face having upwards of 165 markers (or features) used to adequately resolve facial expressions;
Figure 3 shows example placements of ink markers on a model of an actor's face;
Figure 4 is an illustration of a human figure with marker placement positions according to one implementation;
Figure 5 is a back view of the placement of the markers on the human figure shown in Figure 4;
Figures 6A and 6B show marker placements on a 3-D model substantially defining the major extremities (segments) and areas on the body that articulate motions (e.g., the head, shoulders, hips, ankles, etc.);
Figure 7 shows side views of the same human body model in substantially the same pose as shown in Figures 6A and 6B;
Figure 8 shows top and bottom views of the same human body model in substantially the same pose as shown in Figures 6A and 6B;
Figure 9 is a functional block diagram of an integrated motion capture system in accordance with one implementation; and
Figure 10 is a flowchart describing a method of integrating face and body motion capture according to an implementation.

### DETAILED DESCRIPTION

Certain implementations of the present invention as disclosed herein provide for integrated motion capture. One implementation utilizes sparse camera coverage. In this implementation, one high-definition ("HD") motion capture ("MOCAP") video camera is used for the body of an actor, another HD MOCAP video camera is used for the face of the actor, and a film camera is used to capture the entire performance (e.g., "film plate"). During a motion capture performance, integrated motion capture is achieved by acquiring both the face and body data substantially simultaneously, along with a film plate.

After reading this description it will become apparent to one skilled in the art how to practice the invention in various alternative implementations and alternative applications. However, although various implementations of the present invention will be described herein, it is understood that these embodiments are presented by way of example only, and not limitation. As such, this detailed description of various alternative implementations should not be construed to limit the scope or breadth of the present invention as set forth in the appended claims.

Body motion capture typically involves capturing the motion of an actor's torso, head, limbs, hands, and feet. These motions may be regarded as relatively gross movements. MOCAP cameras are placed about a "capture volume" large enough to encompass the actor's performance. The resulting reconstructed 3-D virtual space models the capture volume, and images of the markers coupled to the actor's body are temporally tracked through the frames of the reconstructed virtual space. Because the actor's body movements are relatively gross, large markers may be used to identify specific spots on the actor's body, head, limbs, hands, and feet. The large markers are more easily locatable in the resulting volumetric frames than smaller markers.

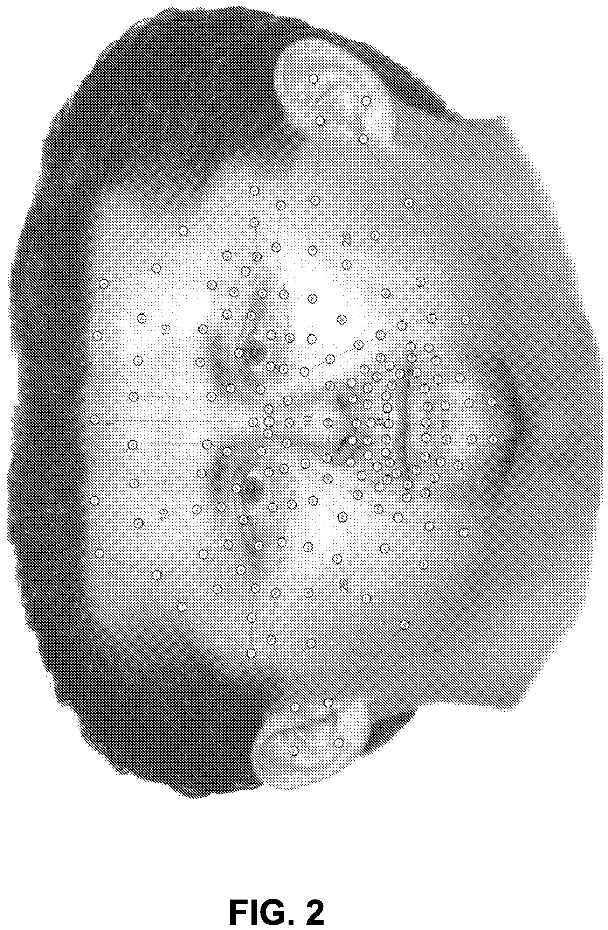

By contrast, facial motion capture involves capturing the movements only of the actor's face. These motions are regarded as relatively fine movements due to the subtle use of facial muscles required to manifest various human expressions. Consequently, the capture volume is usually only large enough to encompass the head, or even just the face. Further, many more comparatively small, markers are required to capture subtle expressive facial movements as opposed to more gross body movements. As shown in Figure 2 of a two-dimensional ("2-D") "unwrapped" scan of a person's face, upwards of 165 markers or more may be used to adequately resolve facial expressions.

Because of the differences in these types of motion capture, and the elaborate requirements for pluralities of specialized cameras and capture volumes, MOCAP systems and methods for improving the efficiency of capturing both facial and body motion significantly advance the state of the art.

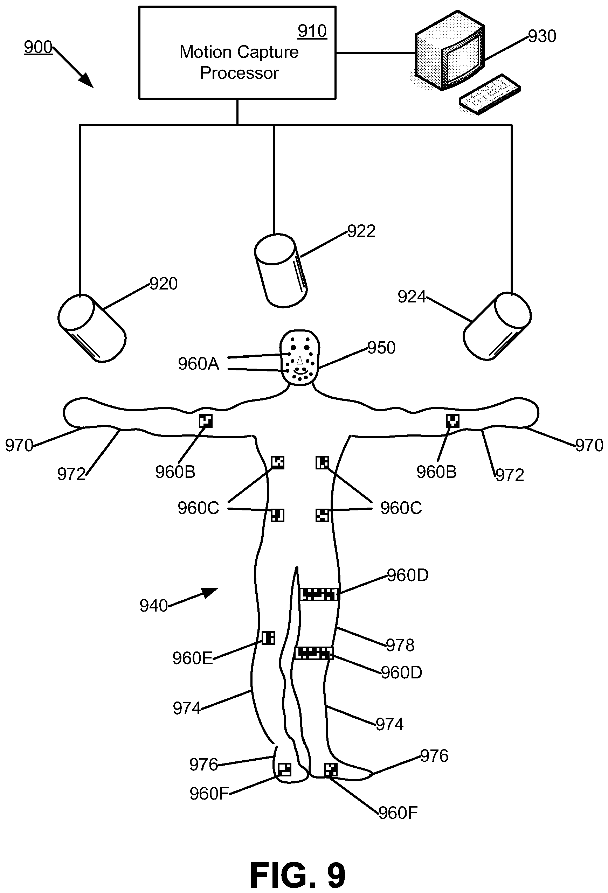

One implementation illustrated in Figure 9 utilizes sparse camera coverage. In this implementation, one high-definition ("HD") motion capture ("MOCAP") video camera 920 is used for the body of an actor, another HD MOCAP video camera 922 is used for the face of the actor, and a film camera 924 is used to capture the entire performance (e.g., "film plate"). In another implementation, one or more HD cameras are used for the body of an actor, another one or more HD cameras are used for the face of the actor, and one or more film cameras are used to capture the entire performance. In another implementation, the motions of multiple actors are captured using one HD camera per body of each actor, one HD camera per face of each actor, and one or more film cameras to capture the entire performance. In another implementation, one or more HD cameras are used per body of each actor, another one or more HD cameras are used per face of each actor, and one or more film cameras are used to capture the entire performance. During a motion capture performance, integrated motion capture is achieved by acquiring both the face and body data substantially simultaneously, along with a film plate.

Figure 9 is a functional block diagram of an integrated motion capture system 900 in accordance with one implementation. The integrated motion capture system 900 includes a motion capture processor 910, motion capture cameras 920, 922, a film camera 924, a user workstation 930, and an actor's body 940 and face 950 appropriately equipped with marker/paint material 960 in a predetermined pattern. In some implementations, other material or features may be used. Although Figure 9 shows only 11 markers 960B-960F, substantially more markers can be used on the body 940 and face 950. The motion capture processor 910 is connected to the workstation 930 by wire or wirelessly. The motion capture processor 910 is typically configured to receive control data packets from the workstation 930.

As shown, two motion capture cameras 920, 922 and one film camera 924 are connected to the motion capture processor 910. One HD MOCAP video camera 920 is used for the body of an actor, another HD MOCAP video camera 922 is used for the face of the actor, and a film camera 924 is used to capture the entire performance. The MOCAP video camera 920 is focused on the actor's body 940 on which markers 960B-960F have been applied, and the MOCAP video camera 922 is focused on the actor's face 950 on which ink markers 960A have been applied. In some implementations, the camera 922 configured to be focused on the actor's face 950 can be attached to the head of the actor (e.g., on a helmet worn by the actor). In other implementations, other markers or facial features on the face 950 can be tracked by the camera 922.

The placement of the markers/features 960A is configured to capture movements of the face 950, while the placement of the markers 960B-960F is configured to capture motions of the body 940 including hands 970, arms 972, legs 974, 978, and feet 976 of the actor.

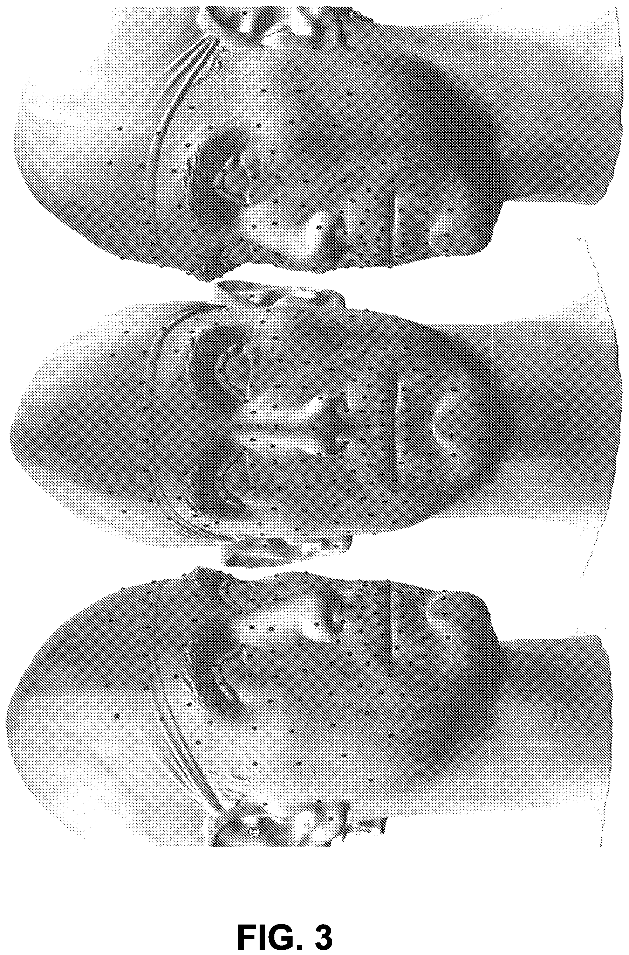

Example placements of ink markers on a model of an actor's face are shown in Figure 3. In this implementation, facial markers comprise ink marks on the actor's face, which are tracked as "features" (a feature also comprising, e.g., a freckle or an eye corner) in the video. Motion capture data are then created from the tracked features. This method can be enhanced by scanning the actor's face a priori and performing a FACS survey (see, e.g., U.S. Patent Application Ser. No. 11/829,711, titled "FACS Cleaning," filed July 27, 2007). It should also be possible to acquire surface data at the same time as acquiring MOCAP data. In other implementations, the facial ink marks are made using infra-red ("IR") ink, glowing paint and/or makeup, and/or quantum nanodots, nanodot ink, and/or nanodot makeup.

Facial surface capture scans may also be acquired from the HD video used to capture the facial motion. In one implementation, a special pattern is projected onto the actor's face and captured along with the MOCAP data. The pattern may comprise visible light, IR light, or light of virtually any wavelength, and a matched band-pass filter may be used to isolate the pattern in real-time or during post-processing. The pattern may be projected only on a first frame and one other frame, or periodically, such as at every other frame. Many different frequencies of projection may be used depending upon circumstances. The pattern may also comprise, for example, a known (identifiable) random pattern, or a grid, or virtually any type of pattern.

Retroreflective markers may also be used with conventional MOCAP camera configuration, in addition to ink markings acquired using HD cameras. Such a configuration may provide real time face (and body) capture and display, while the HD camera arrangement provides for higher resolution and improved labeling during post-processing.

In one implementation, 2-D tracking is performed using video data obtained with one HD camera to capture facial motion. Ink markers on the face, for example, are tracked from frame to frame of the HD video data. Tracking relatively small ink dots is facilitated by the high resolution available using the HD camera. In another implementation, two or more HD cameras are used, from which 2-D tracking may be performed. Additionally, 3-D tracking may be performed, including reconstructing a 3-D virtual space as described above, with additional benefits stemming from the high resolution of the HD cameras. Further, FACS type processing may enhance tracking and facial model reconstruction in 3-D.

In the implementation illustrated in Figure 9, markers 960B capture motions of the arms 972; markers 960C capture motions of the body 940; markers 960D, 960E capture motions of the legs 974; and markers 960F capture motions of the feet 976. Further, uniqueness of the patterns on the markers 960A-960F provides information that can be used to obtain identification and orientation of the markers. The marker 960D is configured as a strip of pattern wrapped around a leg of the actor.

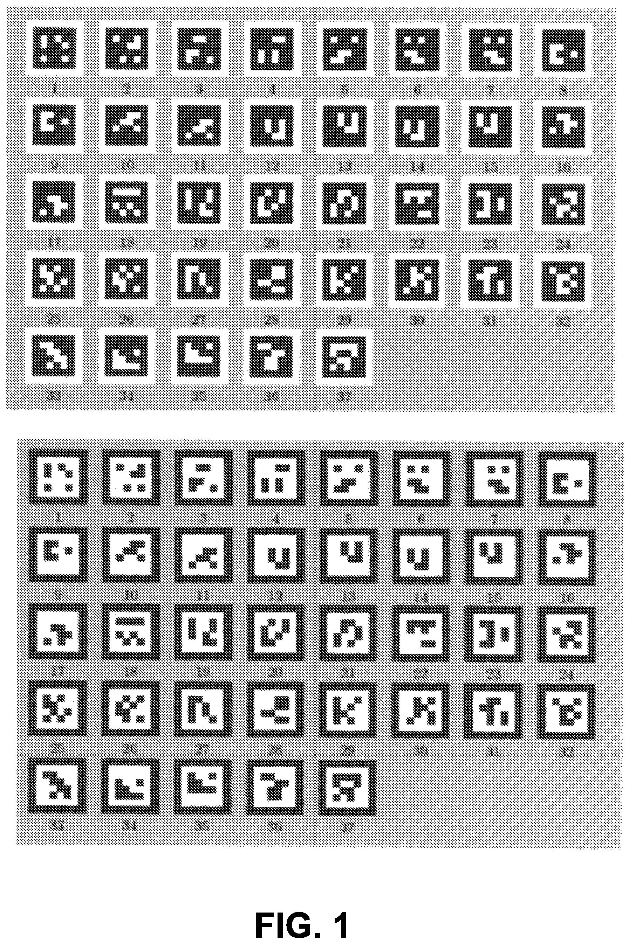

Figure 1 shows a sample collection of specialized "known pattern" markers used for body motion capture according to one implementation of the present invention. Each marker comprises a 6x6 matrix of small white and black squares. Identification and orientation information is encoded in each marker by a unique placement of white squares within the 6x6 matrix. These markers are characterized by being identifiable in any rotational state. The characteristic rotational invariance of these markers enables derivation of both position and orientation information. The orientation of a marker may then be used to determine the orientation of an object, or limb or other body appendage to which the marker is coupled, which may be modeled as a "segment." That is, a marker at the upper forearm and another at the wrist may be used to determine the orientation of the forearm itself, based on the orientations of the markers. Further, the motion of a rod-like segment modeling a skeletal under-structure to the forearm may be modeled. In each case, rotating the marker causes no ambiguity in terms of determining the identity and orientation of the marker, thus demonstrating the effectiveness of this scheme for encoding information. It will be appreciated that encoding schemes using arrangements other than the 6x6 matrix of black and white elements disclosed herein by example may also be implemented. For example, the marker can be configured not as a matrix but as a circular crash test pattern with a different design for each marker so that the position and orientation can be distinguished. In other examples, marker shapes can be flat rectangular matrices. In a further example, the shapes can be a code in themselves.

In another implementation, the encoding scheme for the markers includes "active" as well as "passive" encoding. For example, as discussed above, passively encoded patterns include a code that is captured by motion capture cameras and the camera and decoded. The decoded data can be further used for integration of the motion of a digital character. However, active encoding may be used where the visual/optical signal of the marker to be captured is changing temporarily.

In yet another implementation, the patterns can use fluorescent material. These patterns operate as "primary markers," which have an "active identity" but are "passively powered." (By comparison, an "actively powered" marker typically emits energy of some kind, e.g., an LED, which emits light).

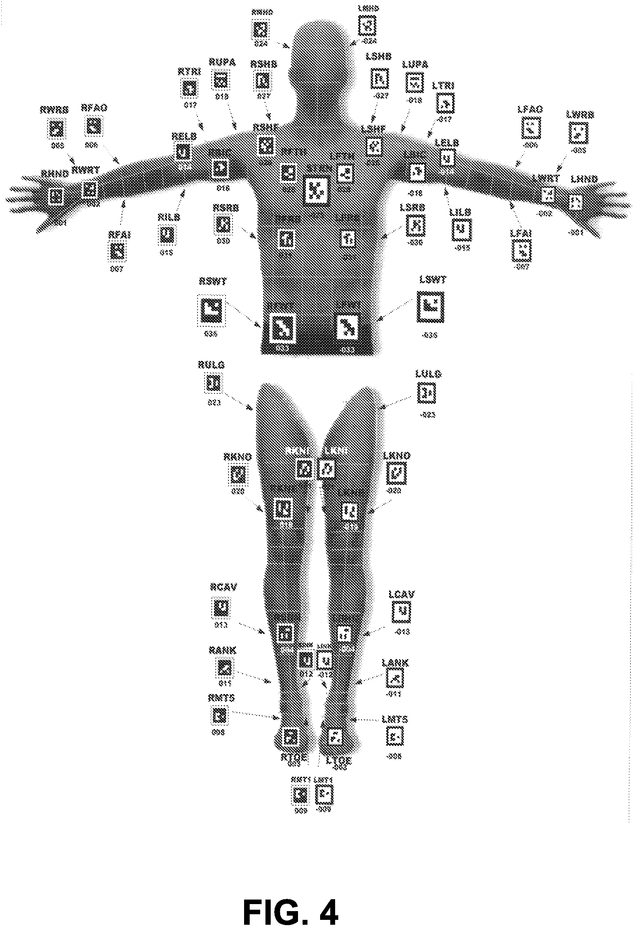

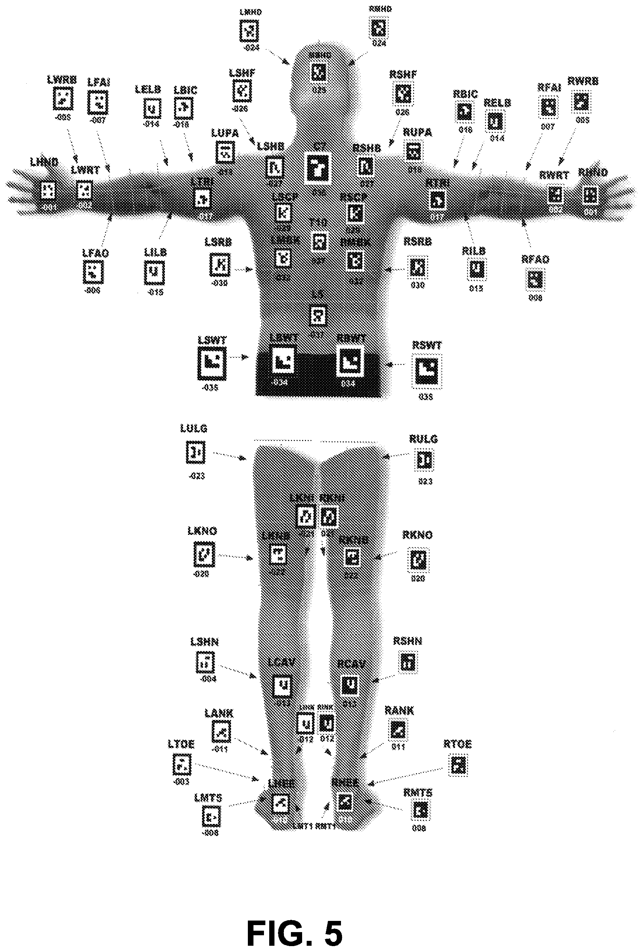

Figure 4 is an illustration of a human figure with marker placement positions according to one implementation. The markers shown encode identification and orientation information using a scheme similar to that depicted in Figure 1. They are positioned substantially symmetrically, and such that each major extremity (i.e., segment) of the body is defined by at least one marker. Approximately half of the markers depicted are positioned on a surface of the body not visible in the frontal view shown, and instead include arrows pointing to their approximate occluded positions. A view of the placement of the markers on the back of the model is shown in Figure 5.

Referring to Figure 9, motion capture cameras 920, 922 encompass a capture space in which the actor's body 940 and face 950 are in motion. Even when the view of any of the markers is occluded to some subset of motion capture cameras 920, 922, another subset will retain a view and capture the motions of the occluded markers. Thus, virtually all movements by an actor so equipped with markers can be captured using the systems described in relation to Figure 9.

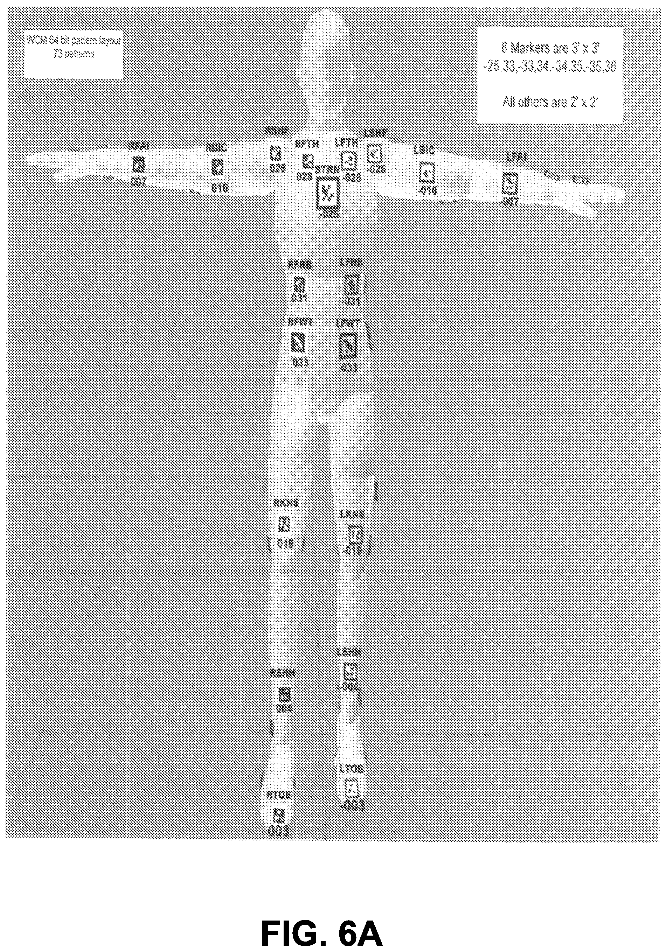

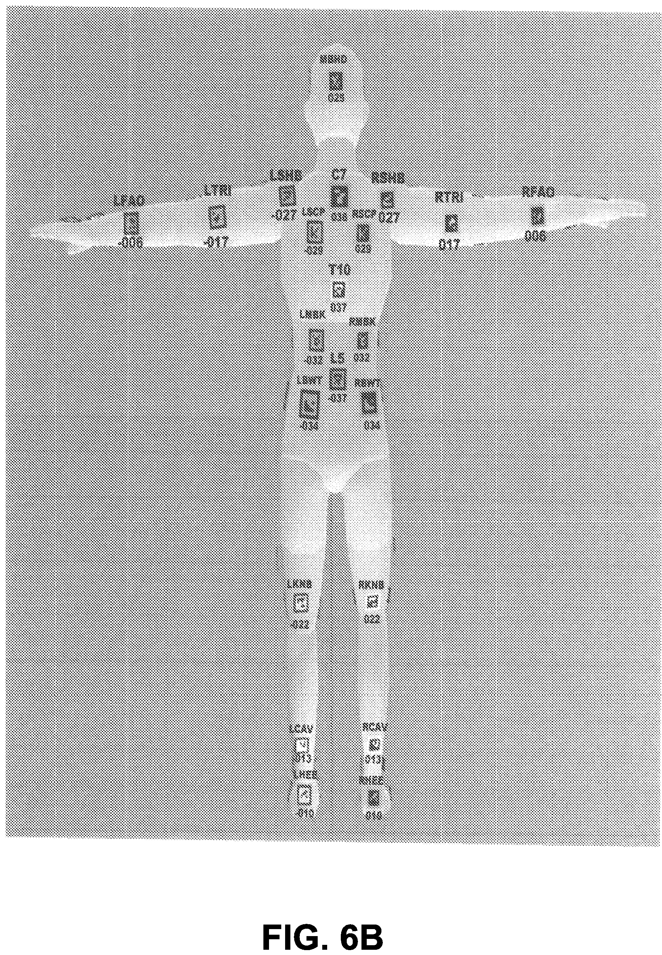

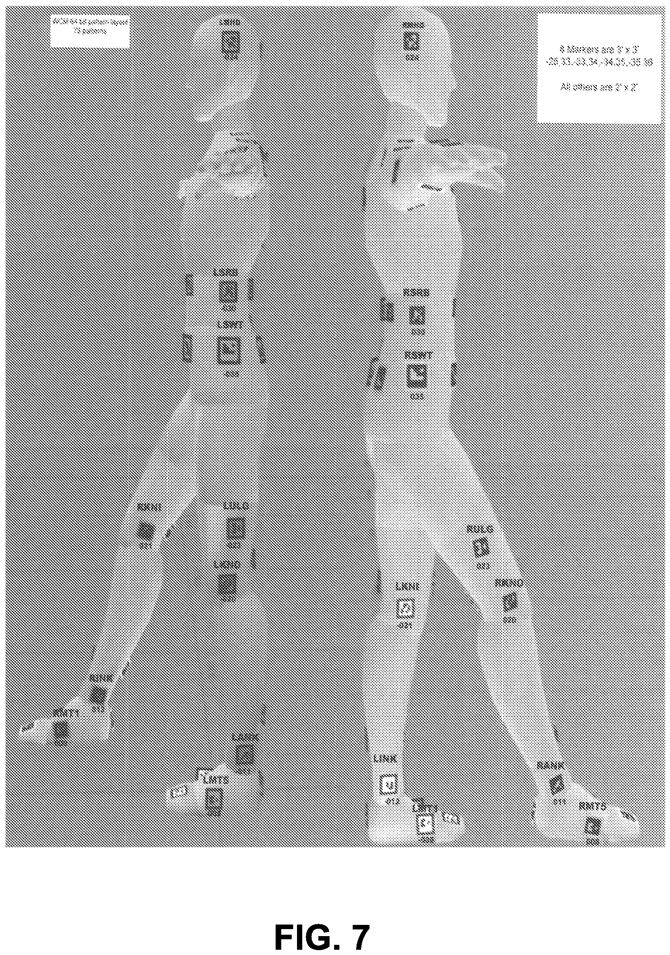

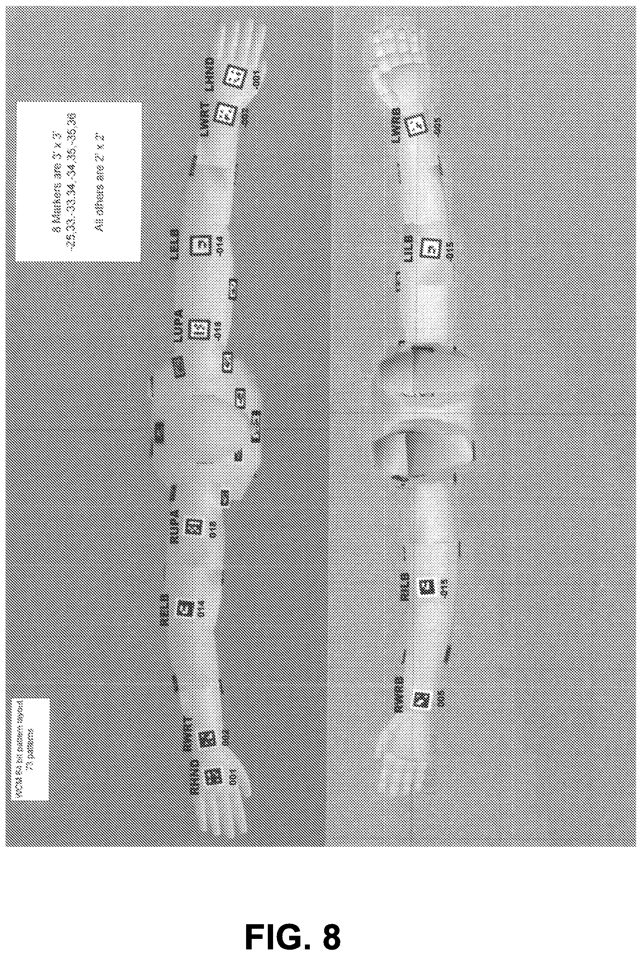

Figures 6A and 6B present frontal and rear views, respectively, of a human body model equipped with markers as described in Figure 4. As shown, only the markers on the forward-facing surfaces of the model are visible. The rest of the markers are partially or fully occluded. Figure 7 shows side views and Figure 8 shows top and bottom views of the same human body model in substantially the same pose as shown in Figure 6. Thus, at any given time, substantially number of the markers is visible to the motion capture cameras 920, 922 placed about the capture space. As depicted, the markers vary not only by pattern, but may also vary by size. For instance, some markers are 3 inches square, whereas others are 2 inches square.

Also, the marker placements on the 3-D model depicted in Figures 6A and 6B substantially define the major extremities (segments) and areas on the body that articulate motions (e.g., the head, shoulders, hips, ankles, etc.). When tracking is performed on the captured data, the positions of the body on which the markers are placed will be locatable and their orientations determinable. Further, the segments of the body defined by the marker placements, e.g., an upper arm segment between an elbow and a shoulder, will also be locatable because of the markers placed substantially at each end of that segment. The position and orientation of the upper arm segment will also be determinable from the orientations derived from the individual markers defining the upper arm.

Referring back to Figure 9, the motion capture cameras 920, 922 are controlled by the motion capture processor 910 to capture synchronous sequences of two-dimensional ("2-D") images of the markers. The synchronous images are integrated into image frames, each image frame representing one frame of a temporal sequence of image frames. That is, each individual image frame comprises an integrated plurality of simultaneously acquired 2-D images, each 2-D image generated by an individual motion capture camera 920 or 922. The 2-D images thus captured may typically be stored, or viewed in real-time at the user workstation 930, or both.

The motion capture processor 910 performs the integration (i.e., performs a "reconstruction") of the 2-D images to generate the frame sequence of three-dimensional ("3-D," or "volumetric") marker data. This sequence of volumetric frames is often referred to as a "beat," which can also be thought of as a "take" in cinematography. Conventionally, the markers are discrete objects or visual points, and the reconstructed marker data comprise a plurality of discrete marker data points, where each marker data point represents a spatial (i.e., 3-D) position of a marker coupled to a target, such as an actor. Thus, each volumetric frame includes a plurality of marker data points representing a spatial model of the target. The motion capture processor 910 retrieves the volumetric frame sequence and performs a tracking function to accurately associate (or, "map") the marker data points of each frame with the marker data points of preceding and subsequent frames in the sequence.

In one implementation, one or more known patterns are printed onto strips 960D. The strips 960D are then wrapped around each limb (i.e., appendage) of an actor such that each limb has at least two strips. For example, two strips 960D are depicted in Figure 9, wrapped around the actor's left thigh 978. End effectors (e.g., hands, feet, head), however, may be sufficiently marked with only one strip. Once captured, as discussed above, the printed patterns of the wrapped strips 960D enable the motion capture processor 910 to track the position and orientation of each "segment" representing an actor's limb from any angle, with as few as only one marker on a segment being visible. Illustrated in Figure 9, the actor's thigh 978 is treated as a segment at the motion capture processor 910. By wrapping a patterned strip 960D with multiple markers around a limb in substantially a circle, the "centroid" of the limb (i.e., segment) can be determined. Using multiple patterned strips 960D of markers, a centroid may be determined to provide an estimate or model of the bone within the limb. Further, it is possible to determine orientation, translation and rotation information regarding the entire segment from one (or more if visible) markers and/or strips applied on the segment.

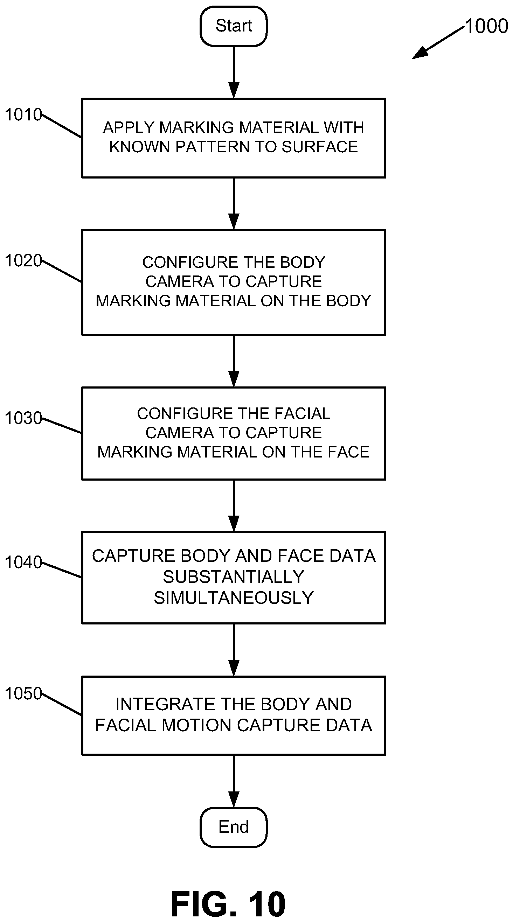

Figure 10 is a flowchart describing a method 1000 of integrating face and body motion capture according to an implementation. A marking material with a known pattern, or an identifiable random pattern, is applied to a surface, at box 1010. In one implementation, the surface is that of an actor's body, and a pattern comprises a plurality of markers that is coupled to the actor's body. In another implementation, a pattern comprises a single marker (e.g., a marker strip) that is coupled to the actor's body. The pattern may also be formed as a strip 960D and affixed around the actor's limbs, hands, and feet, as discussed in relation to Figure 9. Markers also include reflective spheres, tattoos glued on an actor's body, material painted on an actor's body, or inherent features (e.g., moles or wrinkles) of an actor. In yet another implementation, the surface is that of an actor's face, and the marking material comprises: ink or paint markings applied to the actor's face; natural facial features such as a freckle or an eye corner; or any other markers or markings applied to the face.

In addition to the known pattern markers, the actor may be outfitted with a large number of LEDs on the body. In one implementation, the actor wears a special suit on which the LEDs are disposed. In one example, the LEDs are disposed in a pattern comprising lines. The lines of LEDs may be separated by known distances, thus forming a grid. Such a grid of LEDs is tracked in conjunction (and in one implementation, simultaneously) with the known pattern markers. The known pattern markers serve to improve tracking resolution and labeling of the grid pattern by providing unique identity information to the otherwise substantially uniformly disposed plurality of identical LEDs. Thus, temporal tracking and labeling continuity in the virtual space are enhanced.

In another implementation, further improvement in tracking resolution and labeling of the LEDs is achieved by using differently colored LEDs for the lines comprising the grid. Intersections of the differently colored lines (i.e., vertices of the grid) therefore gain greater identifiability during tracking. By comparison, like-colored LEDs comprising the grid would be individually difficult to track, and rotation and orientation information would be difficult to derive. That is, like-colored LEDs may be considered as "passive identity," "actively powered," "secondary markers." In one implementation, however, the LEDs are given "active identity" characteristics by configuring them to pulse or blink according to identifiable temporal sequences.

Motion capture cameras are then set up in a capture space. In one implementation, at least one HD MOCAP video camera is configured to be used for motion capturing the body of an actor (at box 1020), and at least one other HD MOCAP video camera is configured to be used for motion capturing the face of the actor (at box 1030). Further, a film camera is set up to capture the entire performance on a film plate. Then, at box 1040, body motion data and face motion data are captured substantially simultaneously. The captured body motion data and the facial motion data are integrated, at box 1050.

In one implementation, 2-D tracking is performed using video motion data obtained with one HD to capture body motion. Known pattern markers on the body and limbs, for example, are tracked from frame to frame of the HD video data. Tracking the known patterns is facilitated by the high resolution available using the HD camera. In another implementation, two or more HD cameras are used, from which 2-D tracking may be performed. Additionally, 3-D tracking may be performed, including reconstructing a 3-D virtual space as described above, with additional benefits stemming from the high resolution of the HD cameras. Also, FACS type solving may enhance tracking and body model reconstruction in 3-D. A predefined skeleton model may be used to aid construction of a skeleton modeling the actual data obtained using multiple HD cameras to capture the body motion data.

In one implementation, a system implementing facial and body motion capture methods described in the foregoing is augmented with improved tracking methods. A multi-point tracker is implemented for tracking both the primary and secondary patterns. A solver then resolves the translation information from the secondary markers (secondary markers providing no rotation or orientation information), and the translations and rotations from the primary markers onto a skeleton model. The solver may be used to re-project the skeleton data and position information for the primary and secondary markers onto the original film plate. Thus, inconsistencies in tracking, labeling, and other stages of processing may be identified and/or rectified at an early stage by ensuring that the resolved data are in lock step with the images acquired on the film plate.

Various illustrative implementations of the present invention have been described. However, one of ordinary skill in the art will recognize that additional implementations are also possible and within the scope of the present invention. For example, known and identifiable random patterns may be printed, painted, or inked onto a surface of an actor or object. Further, any combination of printing, painting, inking, tattoos, quantum nanodots, and inherent body features may be used to obtain a desired pattern.

## Claims

1. A method, comprising:
applying marking material having a known pattern to body and face of an actor;
configuring at least one first video motion capture camera (920, 922, 924) to capture the marking material on the body of the actor wherein the marking material on the body of the actor includes
a marker that is coded with a code and further wherein the code is printed onto a strip (960D) such that in use a plurality of strips are wrapped around a limb (974) of the actor;
configuring at least one second video motion capture camera (920, 922, 924) to capture the marking material (960A) on the face of the actor;
capturing body motion data using the at least one first video motion capture camera and facial motion data using the at least one second video motion capture camera;
integrating the body motion data and the facial motion data; and
calculating the centroid of the limb using the plurality of strips, wherein applying marking material includes projecting a pattern of light onto the face of the actor.

2. The method of claim 1, wherein the at least one second video motion capture camera is configured to be worn on the head of the actor.

3. The method of claim 1, wherein the code includes identification and orientation information.

4. The method of claim 1, wherein the marker is a matrix of a unique dot pattern.

5. The method of claim 1, wherein the marker is a circular crash test pattern.

6. The method of claim 1, wherein the marking material on the face of the actor includes
ink markings painted on the face.

7. The method of claim 6, wherein the ink markings painted on the face include at least one of infra-red ink, glowing paint/makeup, and quantum nanodots.

8. The method of claim 1, wherein the marking material on the face of the actor includes
inherent features on the face of the actor.

9. The method of claim 8, wherein the inherent features include at least one of moles, wrinkles, freckles, and eye corners.

10. The method of claim 1, wherein the facial motion data includes data obtained by performing facial surface capture scans.

11. The method of claim 1, further comprising
configuring a film camera to capture the entire performance.

12. A system, comprising:
marking material having a known pattern applied to body and face of an actor;
at least one first video motion capture camera to capture the marking material on the body of the actor wherein the marking material on the body of the actor includes
a marker that is coded with a code and further wherein the code is printed onto a strip (960D) such that in use a plurality of strips are wrapped around a limb (974) of the actor;
at least one second video motion capture camera to capture the marking material on the face of the actor;
a processor configured to:
capture body motion data using the at least one first video motion capture camera and facial motion data using the at least one second video motion capture camera;
integrate the body motion data and the facial motion data;
calculating the centroid of the limb using the plurality of strips; and
the marking material being applied by projecting a pattern of light onto the face of the actor.

13. The system of claim 12, further comprising
a helmet to be worn on the head of the actor and to mount the at lest one second video motion capture camera.

## Patentansprüche

1. Verfahren, umfassend:
Anwenden von Markierungsmaterial mit einem bekannten Muster auf einem Körper und einem Gesicht eines Schauspielers;
Konfigurieren mindestens einer ersten Videobewegungserfassungskamera (920, 922, 924) zum Erfassen des Markierungsmaterials auf dem Körper des Schauspielers, wobei das Markierungsmaterial auf dem Körper des Schauspielers Folgendes beinhaltet:
eine Markierung, die mit einem Code codiert ist, und wobei weiterhin der Code derart auf einen Streifen (960D) gedruckt ist, dass im Gebrauch mehrere Streifen um ein Körperglied (974) des Schauspielers gewickelt sind;
Konfigurieren mindestens einer zweiten Videobewegungserfassungskamera (920, 922, 924) zum Erfassen des Markierungsmaterials (960A) auf dem Gesicht des Schauspielers;
Erfassen von Körperbewegungsdaten unter Verwendung der mindestens ersten Videobewegungserfassungskamera und Gesichtsbewegungsdaten unter Verwendung der mindestens einen zweiten Videobewegungserfassungskamera;
Integrieren der Körperbewegungsdaten und der Gesichtsbewegungsdaten; und
Berechnen des Schwerpunkts des Körperglieds unter Verwendung der mehreren Streifen, wobei das Anwenden von Markierungsmaterial das Projizieren eines Lichtmusters auf das Gesicht des Schauspielers beinhaltet.

2. Verfahren nach Anspruch 1, wobei die mindestens eine zweite Videobewegungserfassungskamera konfiguriert ist, am Kopf des Schauspielers getragen zu werden.

3. Verfahren nach Anspruch 1, wobei der Code Identifikations- und Orientierungsinformationen enthält.

4. Verfahren nach Anspruch 1, wobei die Markierung eine Matrix aus einem eindeutigen Punktmuster ist.

5. Verfahren nach Anspruch 1, wobei die Markierung ein kreisförmiges Crashtestmuster ist.

6. Verfahren nach Anspruch 1, wobei das Markierungsmaterial auf dem Gesicht des Schauspielers Folgendes enthält:
auf das Gesicht gemalte Tintenmarkierungen.

7. Verfahren nach Anspruch 6, wobei die auf das Gesicht gemalten Tintenmarkierungen Infrarottinte, Leuchtfarbe/Makeup und/oder Quantennanopunkte beinhalten.

8. Verfahren nach Anspruch 1, wobei das Markierungsmaterial auf dem Gesicht des Schauspielers Folgendes enthält:
inhärente Merkmale auf dem Gesicht des Schauspielers.

9. Verfahren nach Anspruch 8, wobei die inhärenten Merkmale Muttermale, Falten, Sommersprossen und/oder Augenwinkel beinhalten.

10. Verfahren nach Anspruch 1, wobei die Gesichtsbewegungsdaten Daten enthalten, die durch Durchführen von Gesichtsoberflächenerfassungsscans erhalten werden.

11. Verfahren nach Anspruch 1, weiterhin umfassend
Konfigurieren einer Filmkamera zum Erfassen der gesamten Darbietung.

12. System, das Folgendes umfasst:
Markierungsmaterial mit einem bekannten Muster auf einem Körper und einem Gesicht eines Schauspielers;
mindestens eine erste Videobewegungserfassungskamera zum Erfassen des Markierungsmaterials auf dem Körper des Schauspielers, wobei das Markierungsmaterial auf dem Körper des Schauspielers Folgendes beinhaltet:
eine Markierung, die mit einem Code codiert ist, und wobei weiterhin der Code derart auf einen Streifen (960D) gedruckt ist, dass im Gebrauch mehrere Streifen um ein Körperglied (974) des Schauspielers gewickelt sind;
mindestens eine zweite Videobewegungserfassungskamera zum Erfassen des Markierungsmaterials auf dem Gesicht des Schauspielers;
einen Prozessor, der konfiguriert ist zum:
Erfassen von Körperbewegungsdaten unter Verwendung der mindestens ersten Videobewegungserfassungskamera und Gesichtsbewegungsdaten unter Verwendung der mindestens einen zweiten Videobewegungserfassungskamera;
Integrieren der Körperbewegungsdaten und der Gesichtsbewegungsdaten;
Berechnen des Schwerpunkts des Körperglieds unter Verwendung der mehreren Streifen, und
wobei das Markierungsmaterial angewendet wird durch Projizieren eines Lichtmusters auf das Gesicht des Schauspielers.

13. System nach Anspruch 12, weiterhin umfassend
einen Helm zum Tragen auf dem Kopf des Schauspielers und zum Montieren der wenigstens einen zweiten Videobewegungskamera.

## Revendications

1. Procédé, comprenant :
l'application d'un matériau de marquage ayant un motif connu sur le corps et le visage d'un acteur ;
la configuration d'au moins une première caméra vidéo de capture de mouvements (920, 922, 924) pour capturer le matériau de marquage sur le corps de l'acteur, dans lequel le matériau de marquage sur le corps de l'acteur comporte
un marqueur qui est codé avec un code et en outre dans lequel le code est imprimé sur une bande (960D), de sorte que, en utilisation, une pluralité de bandes est enroulée autour d'un membre (974) de l'acteur ;
la configuration d'au moins une seconde caméra vidéo de capture de mouvements (920, 922, 924) pour capturer le matériau de marquage (960A) sur le visage de l'acteur ;
la capture de données de mouvement de corps en utilisant l'au moins une première caméra vidéo de capture de mouvements et de données de mouvement du visage en utilisant l'au moins une seconde caméra vidéo de capture de mouvements ;
l'intégration des données de mouvement de corps et des données de mouvement de visage ; et
le calcul du centroïde du membre en utilisant la pluralité de bandes, dans lequel l'application d'un matériau de marquage comporte la projection d'un motif de lumière sur le visage de l'acteur.

2. Procédé selon la revendication 1, dans lequel l'au moins une seconde caméra vidéo de capture de mouvements est configurée pour être portée sur la tête de l'acteur.

3. Procédé selon la revendication 1, dans lequel le code comporte des informations d'identification et d'orientation.

4. Procédé selon la revendication 1, dans lequel le marqueur est une matrice d'un motif de points unique.

5. Procédé selon la revendication 1, dans lequel le marqueur est un motif circulaire d'essai de choc.

6. Procédé selon la revendication 1, dans lequel le matériau de marquage sur le visage de l'acteur comporte des marquages à l'encre peints sur le visage.

7. Procédé selon la revendication 6, dans lequel les marquages à l'encre peints sur le visage comportent au moins l'un parmi une encre infrarouge, une peinture/un maquillage brillant, et des nanopoints quantiques.

8. Procédé selon la revendication 1, dans lequel le matériau de marquage sur le visage de l'acteur comporte des particularités inhérentes sur le visage de l'acteur.

9. Procédé selon la revendication 8, dans lequel les particularités inhérentes comportent au moins un élément parmi des grains de beauté, des rides, des taches de rousseur, et des coins de l'oeil.

10. Procédé selon la revendication 1, dans lequel les données de mouvement du visage comportent des données obtenues en réalisant des balayages de capture de surface du visage.

11. Procédé selon la revendication 1, comprenant en outre
la configuration d'une caméra-film pour capturer l'ensemble des performances.

12. Système, comprenant :
un matériau de marquage ayant un motif connu appliqué sur le corps et le visage d'un acteur ;
au moins une première caméra vidéo de capture de mouvements pour capturer le matériau de marquage sur le corps de l'acteur, dans lequel le matériau de marquage sur le corps de l'acteur comporte
un marqueur qui est codé avec un code et en outre dans lequel le code est imprimé sur une bande (960D), de sorte que, en utilisation, une pluralité de bandes est enroulée autour d'un membre (974) de l'acteur ;
au moins une seconde caméra vidéo de capture de mouvements pour capturer le matériau de marquage sur le visage de l'acteur ;
un processeur configuré pour :
capturer des données de mouvement de corps en utilisant l'au moins une première caméra vidéo de capture de mouvements et des données de mouvement du visage en utilisant l'au moins une seconde caméra vidéo de capture de mouvements ;
intégrer les données de mouvement de corps et les données de mouvement du visage ;
calculer le centroïde du membre en utilisant la pluralité de bandes ; et
le matériau de marquage étant appliqué en projetant un motif de lumière sur le visage de l'acteur.

13. Système selon la revendication 12, comprenant en outre
un casque devant être porté sur la tête de l'acteur et pour monter l'au moins une seconde caméra vidéo de capture de mouvements.
